(19)

Europäisches
Patentamt
European
Patent Office
Office européen
des brevets

(11) **EP 4 553 549 A1**

(12) **EUROPEAN PATENT APPLICATION**

(43) Date of publication:
**14.05.2025 Bulletin 2025/20**

(21) Application number: **23208110.9**

(22) Date of filing: **07.11.2023**

(51) International Patent Classification (IPC):
**G02B 6/12** *(2006.01)* **G02B 6/293** *(2006.01)*
**G02F 1/00** *(2006.01)* **H04B 10/70** *(2013.01)*

(52) Cooperative Patent Classification (CPC):
**G02B 6/12007; G02B 6/29341; H04B 10/801;**
G02B 6/136; G02B 6/29343; G02B 6/30;
G02B 2006/12035; G02F 2203/15

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Imec VZW**
**3001 Leuven (BE)**

(72) Inventors:
• **Haffner, Christian**
  **3012 Leuven (BE)**
• **De Greve, Kristiaan**
  **3001 Heverlee (BE)**
• **He, Junwen**
  **3000 Leuven (BE)**

(74) Representative: **Roth, Sebastian**
**Mitscherlich PartmbB**
**Patent- und Rechtsanwälte**
**Karlstraße 7**
**80333 München (DE)**

(54) **A PHOTONIC CHIP WITH AN OPTICAL RESONATOR COUPLER**

(57) The present disclosure relates to a photonic chip (10) comprising a first optical propagation element (11) and an optical resonator (12) for optically coupling the first optical propagation element (11) to a second optical propagation element (13). The second optical propagation element (13) may be external the photonic chip (10) or a part of the photonic chip. The first optical propagation element (11) comprises a first material with a first refractive index that is higher than a second refractive index of a second material of the second optical propagation element. An optical coupling efficiency of above 99% can be achieved.

**(a)**                    **(b)**

13    10        10
          11          13    11

12         12

**FIG. 1**

EP 4 553 549 A1

## Description

TECHNICAL FIELD

The present disclosure relates to a photonic chip. The photonic chip presented in this disclosure comprises an optical interconnect or optical coupler for coupling light between one optical propagation element to another. The optical interconnect or optical coupler is or comprises an optical resonator for implementing the optical coupling.

BACKGROUND

Optical interconnects and optical couplers are at the heart of today's information technology, as they are the link that enables optical communication, for example, used for cloud-based computing, mobile streaming, instantaneous messaging, or similar applications. Like many technologies, optical communication relies on hybrid systems, for example, comprising photonic chips for data processing and optical fibers for long-haul transmission. Optical coupling solutions are needed to combine these optical components of the hybrid system.

The achievable optical coupling efficiency between two optical propagation elements depends on the used coupling method, which may for example employ a grating coupler, an edge coupler, or an evanescent coupler. Typically, achieving larger optical coupling efficiencies comes at the cost of a more complex fabrication, a larger footprint, or the need for vertical alignment. As an example, edge coupling with a transmission loss of ~0.25dB (~5.5% loss) have been reported, while more compact grating couplers achieve transmission losses of ~0.5dB (~10.8% loss).

While these optical coupling efficiencies may be usable for some classical applications, they at least do not suffice for more stringent requirements of, for example, quantum applications. Here the issue of the limited coupling efficiency is even more pronounced, since photonic based quantum systems present a tremendous engineering task, and a monolithic platform (e.g., silicon photonics) cannot meet all the requirements simultaneously. A heterogeneous integration of different quantum technologies (e.g., silicon photonics, III-V single photon sources, and superconducting single photon detectors) in a single functional unit have great potential to overcome these obstacles. However, optical coupling losses at each technology interface may contribute noise, which may cause decoherence of the quantum state.

SUMMARY

In view of the above, this disclosure has the objective to provide an improved optical coupling concept for a photonic chip. An objective is to enable low-loss coupling between different optical propagation elements, for instance, of the photonic chip. The coupling losses should be <0.5%. Accordingly, a high optical coupling efficiency is desired. Another objective is to make the coupling concept suitable for an optical coupler of the photonic chip, which is used to couple the photonic chip to an optical fiber. Another objective is to make the coupling concept of this disclosure suitable for designing an optical interconnect of a photonic chip, which is used to couple two optical propagation elements on the photonic chip.

These and other objectives are achieved by the solutions of this disclosure, which are described in the independent claims. Advantageous implementations are described in the dependent claims.

A first aspect of this disclosure relaters to a photonic chip comprising: a first optical propagation element; and an optical resonator for optically coupling the first optical propagation element to a second optical propagation element; wherein the first optical propagation element comprises a first material with a first refractive index that is higher than a second refractive index of a second material of the second optical propagation element.

The optical resonator between the first optical propagation element and the second optical propagation element enables optical coupling efficiencies that exceed 99.5%. A build-up of a resonance in the optical resonator allows transferring all light from the second to the first optical propagation element by means of constructive and destructive interference in the optical propagation elements. The optical coupling assisted by the optical resonator significantly relaxes the requirements for matching field and propagation constant in the optical propagation elements. This enables the very low loss light coupling between the two optical propagation elements.

In an implementation, the photonic chip comprises a set of two or more detuned optical resonators including the optical resonator, wherein the set of optical resonators is configured to optically couple the first optical propagation element to the second optical propagation element.

The multiple optical resonators, which may be detuned, for example, by FWHM/4, can be cascaded to increase the bandwidth of the optical coupling. This is especially beneficial for high-speed data communications, for example, utilizing >100GBaud single wavelength channels. For example, three cascaded optical resonators may allow for a bandwidth of about 480 GHZ, in which the optical signal remains above 99% of its peak value, or may allow for a frequency range of 1.2 THz, over which the optical power drops by only 3dB from its maximum value.

In an implementation of the photonic chip, the second optical propagation element is external to the photonic chip, and the optical resonator is part of an optical coupler of the photonic chip configured to optically couple the photonic chip to the external second optical propagation element.

In an implementation of the photonic chip, the second optical propagation element is an optical fiber.

For instance, the second optical propagation element may be a glass fiber, polymer fiber or similar. Low-loss coupling of the photonic chip to the external optical fiber may thus be enabled by the optical coupling concept of this disclosure.

In an implementation of the photonic chip, the first optical propagation element is a silicon waveguide or a silicon nitride waveguide or an alumina waveguide.

In an implementation of the photonic chip the second refractive index of the optical fiber, e.g. the glass fiber, is in a range of 1-2.

In an implementation of the photonic chip, the photonic chip comprises the second optical propagation element.

That is, the optical resonator may be used as a low-loss optical interconnect (on-chip) for coupling between the two optical propagation elements.

In an implementation of the photonic chip, the first optical propagation element comprises a silicon nitride waveguide, and the second optical propagation element comprises a silicon waveguide.

In an implementation of the photonic chip, the optical resonator is made of silicon, silicon nitride, or alumina.

In an implementation of the photonic chip, the optical resonator is integrated with the first optical propagation element or the second optical propagation element.

In an implementation of the photonic chip, the optical resonator is a ring resonator, a Fabry-Perot resonator, or a 1D photonic crystal resonator.

In an implementation of the photonic chip, the optical resonator comprises a racetrack waveguide or comprises a waveguide with varying width.

In an implementation of the photonic chip, the optical resonator is arranged on or embedded in a substrate of the photonic chip.

In an implementation of the photonic chip, the substrate is etched at least in the vicinity of the optical resonator.

The etching of the substrate may prevent bending losses from becoming dominant. The etching of the substrate may also support waveguide modes, which are suitable for phase matching optical fibers that feature a small core radius.

In an implementation of the photonic chip, a distance of the optical resonator to the second optical propagation element, when the first optical propagation element is coupled to the second optical propagation element, is determined by the structure of the etched substrate and/or is in a range of 200 nm to 10 $\mu$m.

For instance, the above-given range may particularly be 1-10 $\mu$m, or may be 2-10 $\mu$m, or may be 5-10 $\mu$m.

In an implementation of the photonic chip, a distance of the optical resonator to the second optical propagation element, when the first optical propagation element is coupled to the second optical propagation element, is determined by depth at which the optical resonator is embedded below a surface of the substrate.

The optical resonator may be embedded at a depth of around 200 nm to several $\mu$m (e.g. 2-10 $\mu$m) below the surface of the substrate. The second optical propagation element can be arranged above the surface of the substrate, so that the coupling to the optical resonator is controlled by the embedding depth.

In an implementation of the photonic chip, a distance of the optical resonator to the first optical propagation element is in a range of 200 nm to 10 $\mu$m.

For instance, the above-given range may particularly be 1-10 $\mu$m, or may be 2-10 $\mu$m, or may be 5-10 $\mu$m.

In an implementation, the photonic chip further comprises at least one phase shifting element configured to tune a resonance frequency of the optical resonator.

This allows fine-tuning of the optical coupling, and thus improving the optical coupling efficiency between the two optical propagation elements.

In an implementation, the photonic chip further comprises a tunable coupler, wherein the tunable coupler comprises the first optical propagation element and a section of the optical resonator.

For instance, the first optical propagating element may be suspended, and electrostatic forces can be applied to fine-tune the coupling coefficient to maximize the optical transmission from the first to the second optical propagation element.

In an implementation, the photonic chip further comprises optical circuitry configured to perform one or more quantum operations, the optical circuitry being connected to the first optical propagation element.

The low-loss optical coupling achieved in this disclosure is of particular advantage for such quantum applications, which have stricter requirements.

## BRIEF DESCRIPTION OF THE DRAWINGS

The above described aspects and implementations are explained in the following description of embodiments with respect to the enclosed drawings:

FIG. 1   shows examples of photonic chips according to this disclosure.

FIG. 2   illustrates a coupling principle in a photonic chip according to this disclosure.

FIG. 3   shows simulation results for an optical chip according to this disclosure.

FIG. 4   shows further examples of photonic chips according to this disclosure

FIG. 5     shows an example of a photonic chip according to this disclosure with quantum circuitry.

FIG. 6     illustrates a bandwidth increase achieved by using multiple detuned optical resonators.

FIG. 7     shows an etching of a substrate of the photonic chip according to this disclosure and shows an embedded optical resonator.

FIG. 8     illustrates the use of a 1D photonic crystal cavity as the optical resonator of a photonic chip according to this disclosure.

## DETAILED DESCRIPTION OF EMBODIMENTS

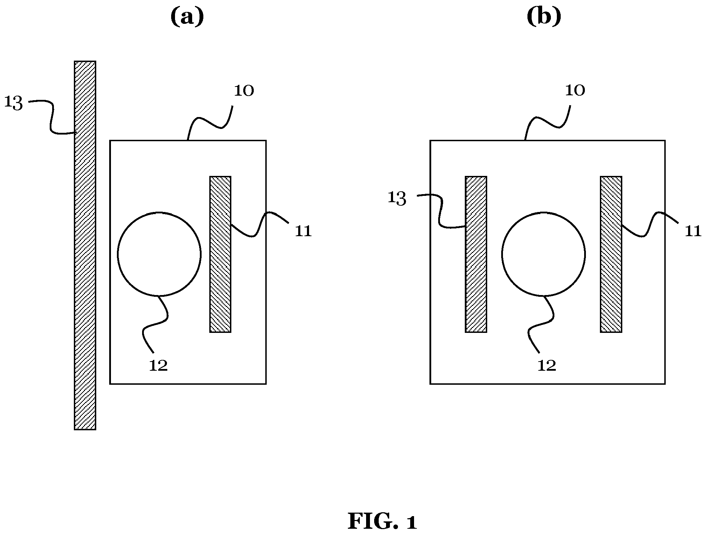

FIG. 1 shows two examples of a photonic chip 10 according to this disclosure. Generally, a photonic chip, also known as an optical chip, may be a microchip that uses light instead of electricity to perform its functions. The photonic chip 10 may accordingly be designed to process, generate, or manipulate an optical signal (light signal). The photonic chip 10 may, for example, be usable in an optical communication system and for high-speed data processing. For instance, the photonic chip 10 could be used in a fiber-optic communication system to amplify optical signals, to process optical signals, or to multiplex or demultiplex optical signal. The photonic chip 10 may also be suitable for quantum technologies, especially in the fields of quantum communication and computation. For example, the photonic chip 10 could be suitable for quantum key distribution, or for implementing quantum gates or the like.

The photonic chip 10 of this disclosure comprises at least a first optical propagation element 11 and an optical resonator 12. The optical resonator 12 is for optically coupling the first optical propagation element 11 to a second optical propagation element 13.

The second optical propagation element 13 may be external to the photonic chip 10, as shown in FIG. 1(a). In this case, the optical resonator 12 may be a part of an optical coupler of the photonic chip 10, which is configured to optically couple the photonic chip 10 to the external second optical propagation element 13. As an example, the second optical propagation element 13 is an optical fiber, like a glass fiber, which optically couples via the optical resonator 12 to the first optical propagation element 11, which may be a waveguide on the photonic chip 10.

Alternatively, the photonic chip 10 may comprise the second optical propagation element 13, as shown in FIG. 1(b). In this case, the first and the second optical propagation element 11, 13 could both be waveguides. For example, the first optical propagation element 11 may be a silicon waveguide, and the second optical propagation element 13 may be a silicon nitride waveguide. Thus, the optical resonator 12 forms an optical interconnect between two waveguide platforms of a single photonic chip 10.

In either case of FIG. 1, the first optical propagation element 11 comprises a first material with a first refractive index, and the second optical propagation element 13 comprises a second material with a second refractive index. The first refractive index is higher than the second refractive index. For instance, the refractive index of the silicon waveguide may be in the range of 3.4-3-6, the refractive index of the silicon nitride waveguide maybe in the range of 1.9-2.1, and the refractive index of the optical fiber may be in the range of 1-2, particularly in a range of 1.4-1.6.

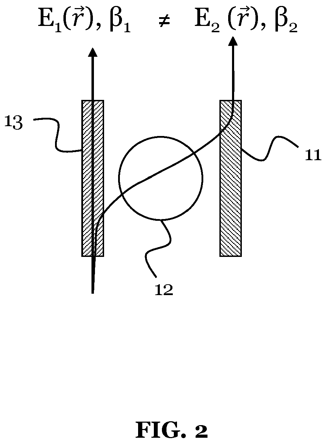

FIG. 2 shows advantages of the coupling principle with the photonic chip 10 according to this disclosure, in particular, for optical coupling from the second optical propagation element 13 via the optical resonator 12 to the first optical propagation element 11. The advantages of the coupling principle are explained in the following in comparison with conventional optical coupling.

Typically, conventional optical coupling into a first optical platform from a second optical platform - e.g., from an optical fiber into a waveguide - is based on either matching the two mode profiles $E_i(\vec{r}, \omega)$ - e.g., this is the case for Butt coupling or when using a grating coupler - or matching the propagation constants $\beta_i(\omega)$ of the modes of the two optical platforms. By matching these properties, the conventional techniques try to maximize the power coupling coefficient $\kappa_{21}$ for coupling between the second and the first optical platform.

In contrast, this disclosure proposes the above-described optical coupling principle, wherein the optical resonator 12 (e.g., an optical cavity) is interposed between the second optical propagation element 13 (second optical platform) and the first optical propagation element 11 (first optical platform). This is again shown in FIG. 2.

The proposed optical coupling concept enables optical coupling rates that exceed 99.5% coupling efficiency. For instance, in one exemplary implementation, an optical fiber as the first optical propagation element 11 evanescently couples to a circular dielectric waveguide cavity as the optical resonator 12, which may be embedded or placed on a substrate of the photonic chip 10. The build-up of a resonance in the cavity of the optical resonator 12 allows to transfer all light from the optical fiber 13 to a waveguide as the first optical propagation element 11 (e.g., a silicon or silicon nitride waveguide) by means of constructive and destructive interference in the waveguide 11 and the optical fiber 13, respectively.

Anyone skilled in the art may appreciate that this kind of cavity-assisted coupling significantly relaxes the requirements for matching the field and propagations constant. For instance, $E_2(\vec{r}, \omega) \neq E_1(\vec{r}, \omega)$ and $\beta_2(\vec{r}) \neq \beta_1(\vec{r})$ as shown in FIG. 2. Therein, $E_2(\vec{r}, \omega)$ is the field in the second optical propagation element 13, and $E_1(\vec{r}, \omega)$ is the field in the first optical propagation element 11. Both fields may moreover be different from a field $E_3(\vec{r}, \omega)$ in the

optical resonator 12. Further, $\beta_2(\vec{r})$ is the propagation constant in the second optical propagation element 13, and $\beta_1(\vec{r})$ is the propagation constant in the first optical propagation element 11. Both propagation constants may moreover be different from a propagation constant $\beta_3(\vec{r})$ in the optical resonator 12.

This enables efficient light coupling between the optical fiber 13 and the waveguide 11, despite having power coupling coefficients that can be significantly smaller than unity - $\kappa_{13} \approx \kappa_{23} < 1$. Therein, $\kappa_{13}$ is the optical coupling coefficient between the optical resonator 12 and the first optical propagation element 11, and $\kappa_{23}$ is the optical coupling coefficient between the second optical propagation element 13 and the optical resonator 12.

Achieving a close to 100% coupling efficiency may require that the intrinsic loss rate of the optical resonator 12 is smaller than the coupling rates, e.g. $Q_{int} \gg Q_\kappa$, wherein $Q_{int}$ represents the quality factor associated with the intrinsic losses of the optical resonator 12, and $Q_\kappa$ represents the quality factor associated with the optical coupling. The intrinsic loss rate pertains to the inherent losses within the optical resonator 12, due to mechanisms like absorption and scattering. The approach of the present disclosure does not require maximizing $Q_{int}$ and $Q_\kappa$ as needed for typical resonator applications, such as filtering, modulation, or light generation. Rather, the disclosure targets to increase $Q_{int}$ while making $Q_\kappa$ as small as possible.

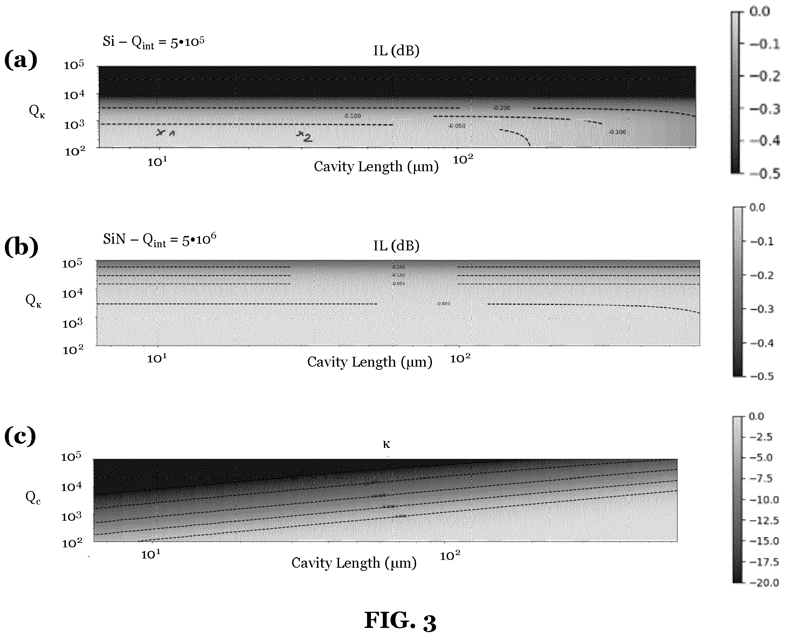

In this respect, FIG. 3 (a) and (b) show achievable losses (dB) under ideal conditions (i.e., only limited by reported propagation losses in (b) SiN ($Q_{int,SiN} = 5 \cdot 10^6$) and (a) Si ($Q_{int,SiN} = 5 \cdot 10^5$) as examples.

Achieving the close to 100% coupling efficiency may further require that the coupling quality factors are below 1k and 10k, depending on the dielectric waveguide material to achieve <1% (i.e. 0.05 dB) insertion losses. Further, maximizing the optical fiber to photonic chip coupling may require maximizing the constructive and destructive interferences, meaning $Q_{\kappa 12}$ should preferably match $Q_{\kappa 23}$. The required coupling rates $\kappa_{13} = \kappa_{23}$ are ~10% for $Q_C = 1k$, as shown in FIG. 3(c). Therein, $Q_C$ represents the quality factor of the optical resonator 12 (cavity). This may be achieved with coupling sections that are only a few micrometer (i.e. several wavelengths) long, thus relaxing the phase matching condition to

$$\Delta n_{\text{eff}} = \frac{\lambda}{2L_{coupl}} \approx 0.1$$

, rather than $\Delta n_{\text{eff}} \ll 0.1$ as current evanescent coupling approaches may require. Therein, $\Delta n_{\text{eff}}$ represents the effective refractive index.

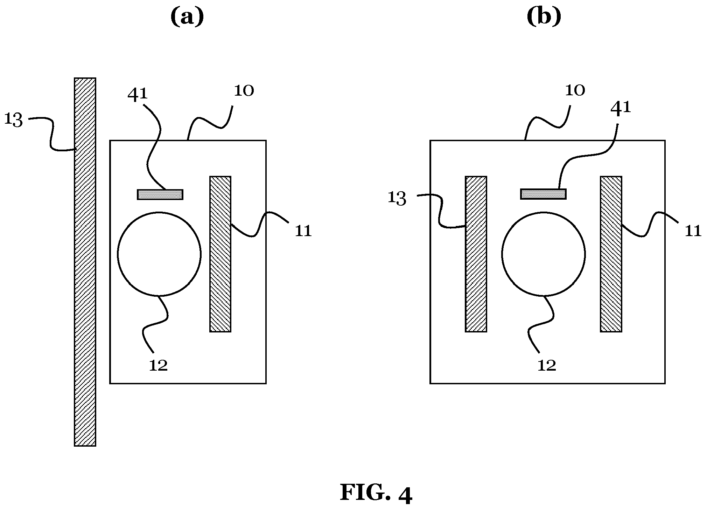

FIG. 4 shows further examples of photonic chips 10 according to this disclosure, which build on the photonic chips 10 shown in FIG. 1. Same elements in FIG. 1 and FIG. 4 are labelled with the same reference signs, and may function and be implemented likewise.

FIG. 4(a) shows a photonic chip 10, wherein the second optical propagation element 13 is external to the photonic chip 10, similar to what is shown in FIG. 1(a). FIG. 4(b) shows a photonic chip 10 that comprises the second optical propagation element 13, similar to what is shown in FIG. 1(b). In particular, FIG. 4 shows that the photonic chips 10 may further comprise at least one phase shifting element 41, which is configured to tune a resonance frequency of the optical resonator 12. The phase shifting element 41 may be a heater, which utilizes the thermo-optic effect, where the refractive index of the material of the optical resonator 12 changes with temperature. The phase shifting element 41 may also comprise electrodes to apply an electric field, which utilizes the electro-optic effect, where the refractive index of a material of the optical resonator 12 changes in response to the applied electric field. The phase shifting element 41 may also be integrated into the optical resonator 12. For instance, liquid crystals may be integrated with the material of the optical resonator, which have the ability to change their orientation (and hence their refractive index) when subjected to an external electric field.

The optical coupling concept of this disclosure may benefit from the addition of the phase shifting element 41, as this may alleviate the need for a single digit nanometer control of a radius of the optical resonator 12, for instance, being a ring resonator. This fabrication challenge is relevant for a single optical resonator 12 that needs to be aligned to an operation wavelength of a light source, but also for multiple optical resonators 12 of a set. This challenge maybe solved by introducing the phase shifting elements 41, preferably low-loss phase shifters, such as thermal or mechanical phase shifters, which are widely used in photonic integrated circuits today.

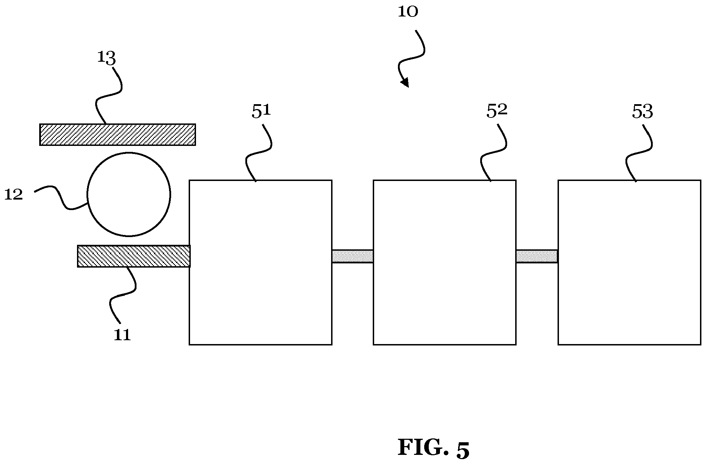

FIG. 5 shows an example of a photonic chip 10 with quantum circuitry. Same elements in FIG. 1 and FIG. 5 are labelled with the same reference signs, and may function and be implemented likewise.

The optical circuitry 51, 52, 53 maybe configured to perform one or more quantum operations. The optical circuitry 51, 52, 53 may be connected to the first optical propagation element 11. The quantum circuitry 51, 52, 53 may comprise one or more qubit generators 51, a circuit 52 for performing one or more quantum computing operations, and one or more detectors 53 for reading the results.

A qubit generator 51 is a device or mechanism that is configured to produce or initialize one or more qubits. In quantum computing, a qubit (short for "quantum bit") is the fundamental unit of quantum information. It is the quantum analog of a classical bit, but unlike a classical bit that can be either 0 or 1, a qubit can exist in a superposition of both states simultaneously. The circuit 52 may comprise a sequence of quantum gates and operations that process and manipulate the qubits, in order to perform quantum computing tasks. The detector 53 may be a quantum measurement apparatus, for instance, a photodetector, ion detector, spin detector or the like. In the illustration of FIG. 5, a heterogeneous integration between various photonic chip technologies is enabled by the coupling principle of this disclosure.

Additional implementations may further improve the photonic chips 10 described previously, and particularly the optical coupling efficiency between the two optical propagation elements 11, 13.

For example, the optical resonator 12 may inherently reduce the bandwidth of the optical coupling, for instance, from tens of THz to 100s or 10s of GHz, depending on the quality factor of the optical resonator 12. This is not of concern for quantum applications as shown in FIG. 5, which normally desire small linewidths (<GHz), which can be well covered by a quality factor of the optical resonator 12 of $Q_C$ <10⁴, while maintaining at least 99% coupling efficiency. However, this may be a challenge for high-speed data communications, especially when utilizing high >100GBaud single wavelength channels. Note that the full width half maximum (FWHM) bandwidth may be 200 GHz for $Q_C$ = 10⁴. Furthermore, also life-science applications using narrow band lasers or communication channels using <100GBaud per wavelength channel could benefit from further improvements.

An improvement, regarding the above, may provide the photonic chip 10 with a set of two or more detuned optical resonators, the set including the above-described optical resonator 12. The optical resonators of the set maybe coupled to each other and/or may be cascaded. For instance, the optical resonators of the set may be detuned by FWHM/4 (along the cascade). The set of optical resonators is then configured, as a whole, to optically couple the second optical propagation element 13 to the first optical propagation element 11. The set of optical resonators increases the bandwidth compared to using only a single optical resonator 12.

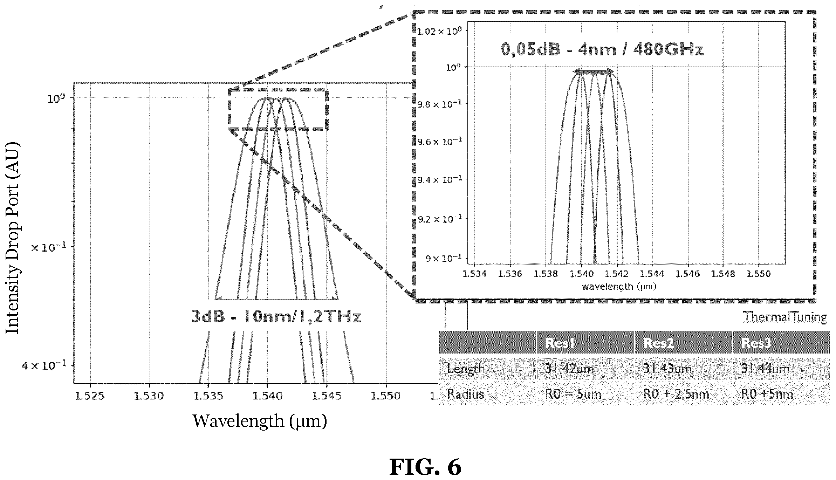

FIG. 6 shows an example for three cascaded optical resonators, in particular, three ring resonators. Each optical resonator has a $Q_C$=500 and a 5 μm radius. This allows for a FW99% of 480GHz, or a 3dB bandwidth of 1.2 THz.

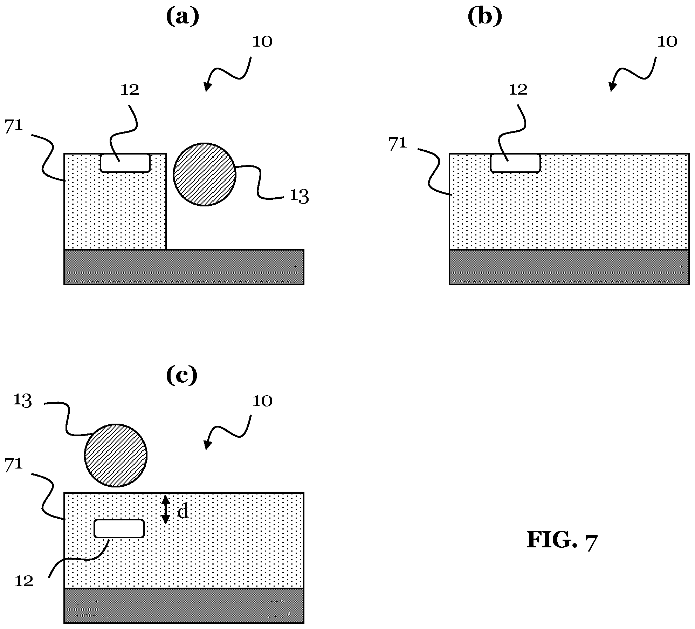

Another improvement may be related to achieving an equal optical coupling to and from the optical resonator 12, as illustrated in FIG. 7. This may be achieved by controlling a distance of the second optical propagation element 13 to a surface of the photonic chip 10, and thus to the optical resonator 12, if the second optical propagation element 13 is external the photonic chip 10. Alternatively, this may be achieved by controlling a waveguide-resonator spacing, if the second optical propagation element 13 is a part of the photonic chip 10. The distance of the optical resonator 12 to the second optical propagation element 13, when the first optical propagation element 11 (not shown in FIG. 7) is coupled to the second optical propagation element 13, may for example be determined by etching a substrate 71 of the photonic chip 10, which the optical resonator 12 is embedded in or is arranged on. This is shown in FIG. 7(a), in comparison to a non-etched substrate 71 in FIG. 7(b). In particular, the distance may be set by shaping a structure of the etched substrate 71. The result may be a horizontal coupling (horizontal being in the substrate plane) of the optical resonator 12 to the second optical propagation element 13, as shown in FIG. 7(a).

Etching the substrate 71 may have further benefits as well. For example, small cavity lengths of the optical resonator 12 (i.e., ≤ 10 μm), in case of e.g. a ring resonator, may require a bending radius of ≤ 1.5 μm. This can result in bending losses (e.g., $Q_{bend}$ ≤ 10⁵), and thus in a reduction of the internal quality factor. This may further cause an increased insertion loss. The bending loss is minimal, however, when the difference in effective refractive index of the mode to the refractive index of the environment is largest. This can also be achieved by etching the substrate 71. Not only does the etching of the substrate 71 prevent the bending losses from becoming dominant, but the etching of the substrate 71 also allows for waveguide modes with an effective refractive index of $n_{eff}$ ≤ 1.44. This may be important for phase matching optical fibers that feature small core radius (e.g. ≤ 3 μm).

An alternative way to control the distance of the optical resonator 12 to the second optical propagation element 13, when the first optical propagation element 11 (not shown) is coupled to the second optical propagation element 13, may be controlled by embedding the optical resonator 12 into the substrate 71. As shown in FIG. 7(c), the optical resonator 12 may be embedded by a depth d below a surface of the substrate 71. The optical resonator 12 may, for example, be embedded at a depth d of around 200 nm to several μm below the surface of the substrate 71. The second optical propagation element 13 can then be arranged vertically above the surface of the substrate 71 (vertical being perpendicular to the substrate plane), as shown in FIG. 7(c). The embedding depth of the optical resonator 12 determines the coupling distance to the second optical propagation element 13 in this case.

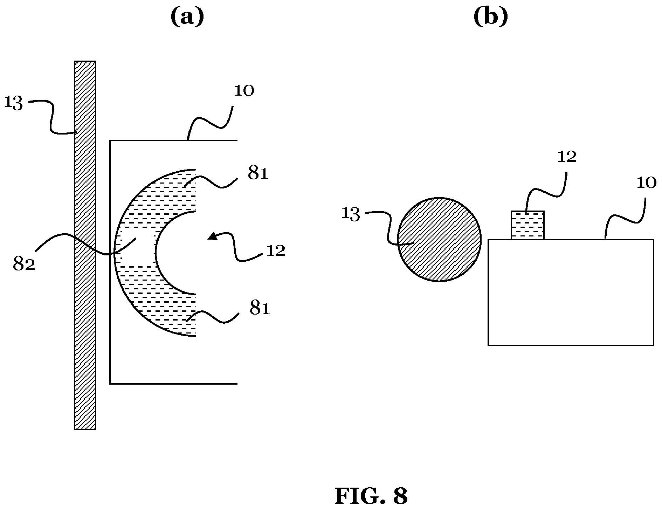

Another implementation of the photonic chip 10 utilizes linear or curved cavities, such as a 1D photonic crystal cavity shown in FIG. 8. In particular, FIG. 8(a) shows a top view of the photonic chip 10 including the optical resonator 12 and the second optical propagation element 13. The 1D photonic crystal resonator 12 comprises mirrors 81 and a cavity. Light can be coupled from the lateral displaced second optical propagation element 13 (e.g., and optical fiber) towards the 1D photonic crystal cavity 82. The reflectivity of the mirrors 82 may be tuned to engineer a directionality of the light coupled out through the top mirror 82 rather than the bottom mirror 82, for instance. Fig. 8(b) shows a cross-sectional side view of the same arrangement.

In summary, the present disclosure provides a photonic chip 10 with a high-quality, low-loss optical coupling concept. Possible applications of the photonic chip 10 include quantum technology (e.g., optical readout of superconducting quantum computers, or optical quantum computing), classical wave division multiplexing for optical communications, and low-bandwidth applications for photonic life science.

In the claims as well as in the description of this disclosure, the word "comprising" does not exclude other elements or steps and the indefinite article "a" or "an" does not exclude a plurality. A single element may fulfill the functions of several entities or items recited in the claims. The mere fact that certain measures are recited in the mutual different dependent claims does not indicate that a combination of these measures cannot be used in an advantageous implementation.

## Claims

1. A photonic chip (10) comprising:

   a first optical propagation element (11); and
   an optical resonator (12) for optically coupling the first optical propagation element (11) to a second optical propagation element (13);
   wherein the first optical propagation element (11) comprises a first material with a first refractive index that is higher than a second refractive index of a second material of the second optical propagation element (13).

2. The photonic chip (10) of claim 1, wherein the second optical propagation element (13) is external to the photonic chip (10), and the optical resonator (12) is part of an optical coupler of the photonic chip (10) configured to optically couple the photonic chip (10) to the external second optical propagation element (13).

3. The photonic chip (10) of claim 1 or 2, wherein the second optical propagation element (13) is an optical fiber and/or wherein the first optical propagation element (11) is a silicon waveguide or a silicon nitride waveguide or an alumina waveguide.

4. The photonic chip (10) of claim 3, wherein the second refractive index of the optical fiber is in a range of 1-2.

5. The photonic chip (10) of claim 1, wherein the photonic chip (10) comprises the second optical propagation element (13) and/or wherein the first optical propagation element (11) comprises a silicon waveguide and the second optical propagation element (13) comprises a silicon nitride waveguide.

6. The photonic chip (10) of one of the claims 1 to 5, wherein the optical resonator (12) is made of silicon, silicon nitride, or alumina, and/or wherein the optical resonator (12) is integrated with the first optical propagation element (11) or the second optical propagation element (13).

7. The photonic chip (10) of one of the claims 1 to 6, wherein the optical resonator (12) is a ring resonator, a Fabry-Perot resonator, or a 1D photonic crystal resonator (81, 82).

8. The photonic chip (10) of one of the claims 1 to 7, wherein the optical resonator (12) comprises a racetrack waveguide or comprises a waveguide with varying width.

9. The photonic chip (10) of one of the claims 1 to 8, wherein the optical resonator (12) is arranged on or embedded in a substrate (71) of the photonic chip (10).

10. The photonic chip (10) of claim 9, wherein the substrate (71) is etched at least in the vicinity of the optical resonator (12).

11. The photonic chip (10) of claim 10, wherein a distance of the optical resonator (12) to the second optical propagation element (13), when the first optical propagation element (11) is coupled to the second optical propagation element (13), is determined by the structure of the etched substrate (71) and/or is in a range of 200 nm to 10 $\mu$m.

12. The photonic chip (10) of claim 9 or 10, wherein a distance of the optical resonator (12) to the second optical propagation element (13), when the first optical propagation element (11) is coupled to the second optical propagation element (13), is determined by depth at which the optical resonator (12) is embedded below a surface of the substrate (71).

13. The photonic chip (10) of one of the claims 1 to 12, further comprising at least one phase shifting element (41) configured to tune a resonance frequency of the optical resonator (12).

14. The photonic chip (10) of one of the claims 1 to 13, further comprising a tunable coupler, wherein the tunable coupler comprises the first optical propagation element (11) and a section of the optical resonator (12).

15. The photonic chip (10) of one of the claims 1 to 14, wherein the photonic chip (10) comprises optical circuitry (51, 52, 53) configured to perform one or more quantum operations, the optical circuitry (51, 52, 53) being connected to the first optical propagation element (11).

FIG. 1

$$E_1(\vec{r}),\, \beta_1 \quad \neq \quad E_2(\vec{r}),\, \beta_2$$

13

11

12

**FIG. 2**

**FIG. 3**

EP 4 553 549 A1

FIG. 4

FIG. 5

FIG. 6

**(a)**

10

71

12

13

**(b)**

10

71

12

**(c)**

13

71

10

d

12

**FIG. 7**

EP 4 553 549 A1

(a)

10

81

12

81

13

82

(b)

10

12

13

FIG. 8

## EUROPEAN SEARCH REPORT

Application Number

EP 23 20 8110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 532 790 B2 (3M INNOVATIVE PROPERTIES CO [US]) 12 May 2009 (2009-05-12)<br>* column 5, line 66 – column 6, line 12 *<br>* column 6, line 63 – column 7, line 21 *<br>* column 14, paragraph 3 *<br>* figures 1B,3-5 * | 1,2,4,9,<br>11,13-15 | INV.<br>G02B6/12<br>G02B6/293<br>G02F1/00<br>H04B10/70 |
| X<br>A | US 9 261 754 B2 (ERICSSON TELEFON AB L M [SE]) 16 February 2016 (2016-02-16)<br>* column 4, lines 23-55 *<br>* figures 1,3,4,6,8 * | 1,3-15<br><br>2 | |
| X<br><br><br><br><br><br><br><br><br>A | ANDRYIEUSKI A. ET AL: "Nanocouplers for Infrared and Visible Light",<br>ADVANCES IN OPTOELECTRONICS,<br>vol. 2012, 4 October 2012 (2012-10-04),<br>pages 1-17, XP093144663,<br>US<br>ISSN: 1687-563X, DOI: 10.1155/2012/839747<br>Retrieved from the Internet:<br>URL:http://downloads.hindawi.com/archive/2012/839747.xml><br>* Sec. 3;<br>page 3, right-hand column *<br>* Sec. 5.3;<br>page 5, right-hand column *<br>* figures 3-5,7b * | 1,2<br><br><br><br><br><br><br><br><br>3-15 | TECHNICAL FIELDS SEARCHED (IPC)<br><br>G02B<br>G02F<br>H04B |
| A | US 2018/113373 A1 (WITMER JEREMY D [US] ET AL) 26 April 2018 (2018-04-26)<br>* paragraphs [0024] – [0033], [0046], [0047], [0057], [0064], [0074], [0075] *<br>* figures 1-2 * | 1-15 | |

-/--

The present search report has been drawn up for all claims

| Place of search | Date of completion of the search | Examiner |
|---|---|---|
| Berlin | 26 April 2024 | Moroz, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Pautrel Samuel ET AL: "Efficient optical coupling to gallium arsenide nano-waveguides and resonators with etched conical fibers", arXiv.org, 19 October 2023 (2023-10-19), pages 1-8, XP093144669, Ithaca DOI: 10.48550/arxiv.2310.12584 Retrieved from the Internet: URL:https://arxiv.org/abs/2310.12584 [retrieved on 2024-03-22] * Sec. III; page 3, right-hand column – page 5, right-hand column * * figures 4,5 * | 1-15 | |
| A | US 2006/159411 A1 (MILLER ROBERT A [US]) 20 July 2006 (2006-07-20) * paragraph [0067] * * figure 7 * | 1-15 | |

TECHNICAL FIELDS
SEARCHED        (IPC)

The present search report has been drawn up for all claims

| Place of search | Date of completion of the search | Examiner |
|---|---|---|
| Berlin | 26 April 2024 | Moroz, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

**EP 23 20 8110**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-04-2024**

| Patent document cited in search report | | Publication date | Patent family member(s) | | Publication date |
|---|---|---|---|---|---|
| US 7532790 | B2 | 12-05-2009 | US | 2007230870 A1 | 04-10-2007 |
| | | | WO | 2007117985 A2 | 18-10-2007 |
| US 9261754 | B2 | 16-02-2016 | CN | 105814483 A | 27-07-2016 |
| | | | EP | 3080662 A1 | 19-10-2016 |
| | | | US | 2015168803 A1 | 18-06-2015 |
| | | | WO | 2015087261 A1 | 18-06-2015 |
| US 2018113373 | A1 | 26-04-2018 | NONE | | |
| US 2006159411 | A1 | 20-07-2006 | EP | 1977276 A2 | 08-10-2008 |
| | | | US | 2006159411 A1 | 20-07-2006 |
| | | | WO | 2007087024 A2 | 02-08-2007 |

EPO FORM P0459

For more details about this annex : see Official Journal of the European Patent Office, No. 12/82